Europäisches Patentamt

European Patent Office

Office européen des brevets

(19)

(11) **EP 0 406 729 B1**

(12) **EUROPEAN PATENT SPECIFICATION**

(45) Date of publication and mention
of the grant of the patent:
**20.11.1996 Bulletin 1996/47**

(51) Int Cl.⁶: **G09B 9/058**, G09B 9/05

(21) Application number: **90112486.7**

(22) Date of filing: **29.06.1990**

(54) **Riding simulation of motorcycle**

Fahrtsimulation eines Motorrades

Simulation de conduite d'une motocyclette

(84) Designated Contracting States:
**DE FR GB IT**

(30) Priority: 30.06.1989 JP 166931/89
18.06.1990 JP 158939/90
18.06.1990 JP 158940/90
18.06.1990 JP 158941/90
18.06.1990 JP 158942/90
18.06.1990 JP 158943/90
18.06.1990 JP 158944/90
28.06.1990 JP 170582/90

(43) Date of publication of application:
**09.01.1991 Bulletin 1991/02**

(73) Proprietor: **HONDA GIKEN KOGYO KABUSHIKI KAISHA**
**Minato-ku Tokyo (JP)**

(72) Inventors:
• **Fujita, Isao**
**Kawagoe-shi Saitama-ken (JP)**
• **Mukumoto, Takaji**
**Hannou-shi Saitama-ken (JP)**
• **Hijikata, Toshihiro**
**Saitama-ken (JP)**
• **Ichizawa, Takashi**
**Iruma-shi Saitama-ken (JP)**
• **Iwata, Kazuyuki**
**Tokorozawa-shi Saitama-ken (JP)**

• **Miyamaru, Yukio**
**Itabashi-ku Tokyo (JP)**
• **Kizawa, Hirotoshi**
**Mitaka-shi Tokyo (JP)**
• **Aoki, Katsuhito**
**Niiza-shi Saitama-ken (JP)**
• **Yoshida, Keigo**
**Niiza-shi Saitama-ken (JP)**
• **Yamasaki, Goro**
**Niiza-shi Saitama-ken (JP)**
• **Ohtsuka, Hiroshi**
**Kawagoe-shi Saitama-ken (JP)**
• **Kashiwagi, Hitoshi**
**Shiki-shi Saitama-ken (JP)**

(74) Representative:
**Prechtel, Jörg, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**81635 München (DE)**

(56) References cited:
DE-A- 3 612 383          US-A- 3 686 776
US-A- 4 049 262          US-A- 4 303 236
US-A- 4 887 967

## Description

The present invention relates to a riding simulation system according to the precharacterizing part of claim 1.

Conventionally, there is provided a riding simulation system used for the amusement which contains the model motorcycle and CRT display, for example. By varying the display image, the game-player can enjoy the riding simulation game. In order to further improve the riding feeling, Japanese Patent Laid-Open Publication No. 61-154689 and Japanese Utility Model Laid-Open Publication No. 62-1688 are invented, wherein the rider can freely lean the model motorcycle in leftward or rightward direction.

In the above-mentioned conventional riding simulation system, the model motorcycle is designed to be leaned in response to variation of the center-of-gravity of the model motorcycle on which the rider rides. In general, when the rider intends to change the running condition of the motorcycle into the curving condition, the rider leans the motorcycle to one side so that the center-of-gravity of the rider and motorcycle is varied. However, the conventional system cannot simulate the actual riding feelings corresponding to the turning manner, acceleration and deceleration, running attitude of the motorcycle and the like.

From document DE-A-3612383 there is known a motorcycle riding simulation system in which the rolling movement of the motorcycle can be controlled by driving means. The model motorcycle of this disclosure is pivotally carried by a pivot shaft which extends in a longitudinal direction of the model motorcycle. A pivot lever extending from the pivot shaft in an opposite direction with respect to the model motorcycle can be moved by a drive means so as to pivot the model motorcycle around the pivot shaft. However, movement of the motorcycle in a pivoting direction around a pivot shaft is the only movement which can be controlled by the drive means. This model motorcycle is therefore not capable of realistically simulating a plurality of driving situations which might occur during driving a real motorcycle. Therefore, the motorcycle riding simulation system of this disclosure can hardly be used for educational applications or in amusement parks, where quite realistic simulation of the driving behavior of a motor cycle is one of the most relevant requirements.

US-PS 3686776 shows a motorcycle riding simulation system in which the model motorcycle can carry out a rolling movement about a longitudinal axis. However, in the motorcycle riding simulation system of this disclosure there are no driving means for actively rolling the model motorcycle.

US-PS 4303236 shows a capsule which can be used in amusement parks, in which a plurality of persons can participate in order to carry out a virtual journey. However, the persons sitting in this capsule have no possibility of influencing the specific movement of the capsule.

US-PS 4049262 shows a motorcycle riding simulation system in which a model motorcycle cannot be actively controlled so as to carry out a plurality of simulation movements. Instead, the model motorcycle of this disclosure has to be inclined by a movement of the body of the person sitting on the model motorcycle, thus failing to provide a realistic driving feeling for the rider.

It is therefore an object of the present invention to provide a motorcycle riding simulation system which can simulate the riding feelings of a real motorcycle with great accuracy. This object is solved by motorcycle riding simulation system according to claim 1.

The motorcycle riding simulation system to be ridden by a person according to the present invention comprises: a base and a movable carriage mounted on said base; a model motorcycle mounted on said movable carriage and comprising model controls, said model controls and said model motorcycle being operable by said person; detecting means for sensing operation of said model motorcycle and said model controls; driving means for driving said movable carriage to move in a desired direction; control means for controlling said driving means in response to the operation sensed by the detecting means, said driving means comprising means for driving said movable carriage such as to simulate a rolling movement of said model motorcycle about a center of rotation. The motorcycle riding simulation system of the present invention is characterized in that said driving means comprises means for driving said movable carriage such as to simulate a pitching movement of said model motorcycle, said control means controlling said driving means in response to the operation sensed by said detecting means such as to carry out said simulation of said pitching movement.

According to the present invention, there may be provided, that a center-of-rotation in the rolling movement of the model motorcycle is raised by said controll means as a running speed of the model motorcycle becomes higher.

According to the present invention, there may further be provided

a display unit provided in front of the model motorcycle, the display unit displaying images corresponding to pre-stored image signals; and further control means may be profided for controlling the driving means in response to operation and movement of the person who rides on the model motorcycle to thereby control a yawing movement, a rolling movement and a pitching movement of the model motorcycle, the control means controlling the image signal to thereby vary the image displayed by the display unit in response to a simulated running state of the model motorcycle, wherein the control means controls the display unit such that a horizon of the image displayed by the display unit is rotated by an angle corresponding to increase of a rolling angle of the model motorcycle in a direction inverse to a rolling direction of the model motorcycle.

In the subclaims particular advantages and embodiments of the present invention are stated.

Further objects and advantages of the present invention will be apparent from the following description, reference being had to the accompanying drawings wherein preferred embodiments of the present invention are clearly shown.

In the drawings:

Fig. 1 is a side view showing the construction and mechanism of the riding simulation system of motorcycle according to a first embodiment of the present invention;

Fig. 2 is a backside view of the first embodiment;

Fig. 3 is a plan view showing the first embodiment from which the model motorcycle is removed;

Fig. 4 is a perspective side view showing the support frame portion of the first embodiment;

Figs. 5 and 13 are side views showing movements of the model motorcycle according to the first embodiment;

Fig. 6 is a block diagram showing an electric configuration of the first embodiment;

Fig. 7 shows the yawing, rolling and pitching movements of the model motorcycle;

Figs. 8 and 10 are flowcharts showing the computation processings which are executed by the computer shown in Fig. 6;

Figs. 9 and 12 show display images which are controlled by the first embodiment;

Fig. 11 is a graph showing the relationship between the simulated running speed of motorcycle and center-of-rotation in the rolling movement;

Figs. 14 to 16 show a riding simulation system of motorcycle according to a second embodiment; and

Figs. 17 to 19 show a riding simulation system of motorcycle according to a third embodiment.

Next, description will be given with respect to the preferred embodiments of the present invention.

[A] FIRST EMBODIMENT

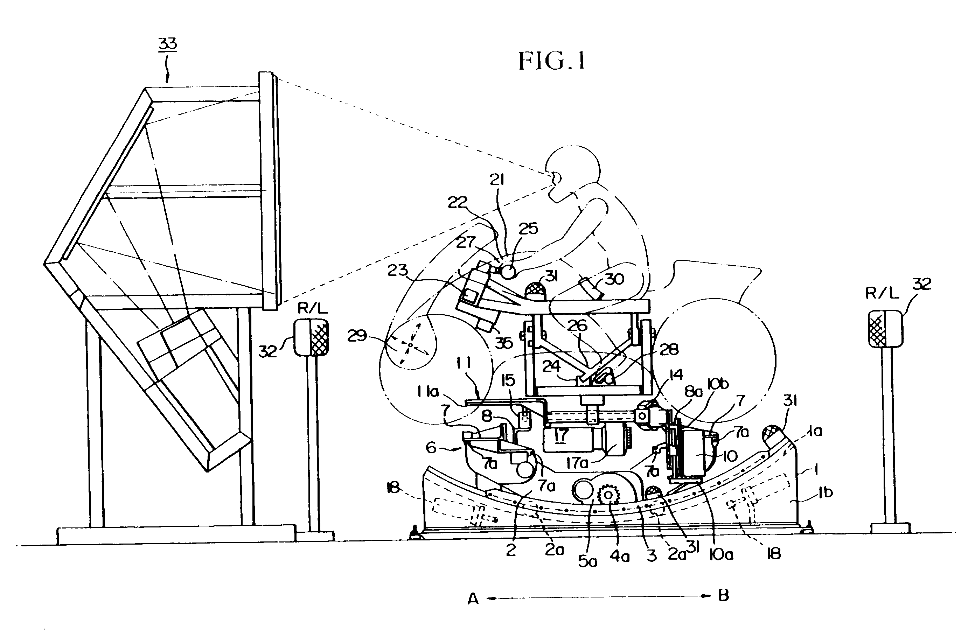

Referring now to the drawings, wherein like reference characters designate like or corresponding parts throughout the several views, Figs. 1 to 4 show mechanical construction of a riding simulation system of motorcycle according to a first embodiment of the present invention.

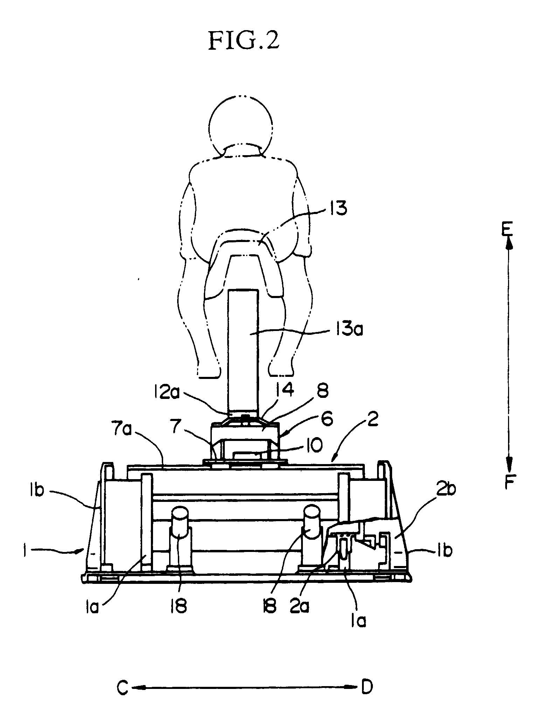

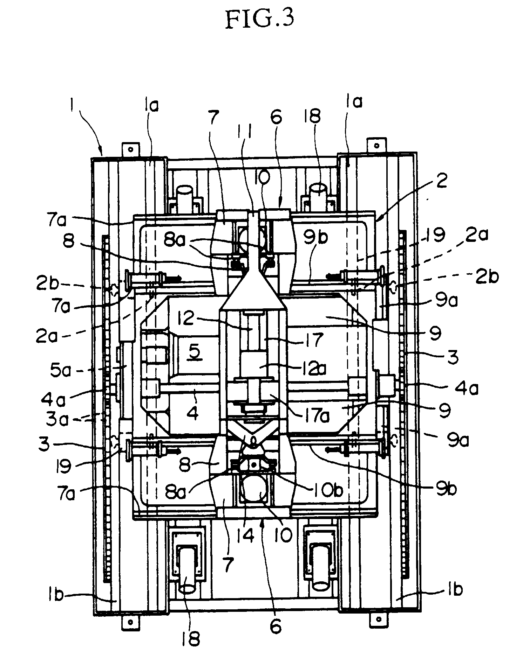

In Figs. 1 to 4, 1 designates a base, and 2 designates a movable carriage. Herein, the movable carriage 2 is supported by the base 1 in such a manner that the movable carriage 2 can freely move in forward and backward directions (i.e., directions AB in Fig. 1) by wheels 2a placed on a pair of guide-rails 1a formed on the base 1. Herein, both of the base 1 and movable carriage 2 have the symmetric construction, therefore, description will be mainly given with respect to one side construction of the base 1 and movable carriage 2. In the base 1, each of guide-plates 1b is positioned outside each guide-rail 1a. The longitudinal upper edge portion of each guide-plate 1b is curved so that the base 1 itself has a concave shape. Then, a guide-roller 2b is placed in contact with the upper edge portion of the guide-plate 1b. Further, each of racks 3 along which a plenty of pins 3a are disposed is fixed at the outside of the guide-plate 1b. In addition, a drive shaft 4 is placed inside the movable carriage 2, wherein a pair of pinions 4a engaging with the racks 3 are mounted at both edges of this drive shaft 4. This drive shaft 4 is driven by a motor 5 via a gear box 5a provided within the movable carriage 2, so that the drive shaft 4 can be rotated in forward and backward directions. Thus, the movable carriage 2 can be moved along the guide-rails 1a in forward and backward directions. The guide-rail 1a is curved such that both edges thereof are raised upward. Therefore, in response to the forward and backward movement of the movable carriage 2, the movable carriage 2 can be moved upward and downward (i.e., directions EF in Fig. 2) like a rocking chair, for example. Furthermore, a pair of movable mechanisms 6 are mounted at positions corresponding to front and back sides of the model motorcycle 13 within the movable carriage 2, wherein each movable mechanism 6 functions independently to move the model motorcycle 13 in horizontal direction (i.e., directions CD in Fig. 2) and vertical direction (i.e., directions EF in Fig. 2). More specifically, each movable mechanism 6 is constructed by a slide member 7, guide-rails 8a and an elevation frame 8. Herein, the slide member 7 can freely slide along a guide-rail 7a placed on the movable carriage 2 in horizontal direction; the guide-rail 8a is fixed at the slide member 7; and the elevation frame 8 is supported by the guide-rail 8a in such a manner that the elevation frame 8 can freely move in upward and downward directions. In the movable carriage 2, a motor 9 is coupled to a ball screw 9b via a gear box 9a. By revolving the ball screw 9b forward and backward, the slide member 7 is moved rightward and leftward in Fig. 3. On the other hand, a motor 10 mounted on the slide member 7 is coupled to a ball screw 10b via a gear box 10a. By revolving the ball screw 10b forward and backward, the elevation frame 8 is moved upward and downward. Thus, the elevation frame 8 which functions as the moving part of each movable mechanism 6 can be moved in both of the horizontal and vertical directions.

In order to reduce the production cost of the present embodiment, the movable portion of the above-mentioned movable carriage 2 can be omitted such that the non-movable portion of the movable carriage 2 and the base 1 are placed on the ground. In this case, the pitching movement of the model motorcycle 13 can be realized by the pitching movement of the elevation frame 8 which moves upward and downward along the guide-rails 8a.

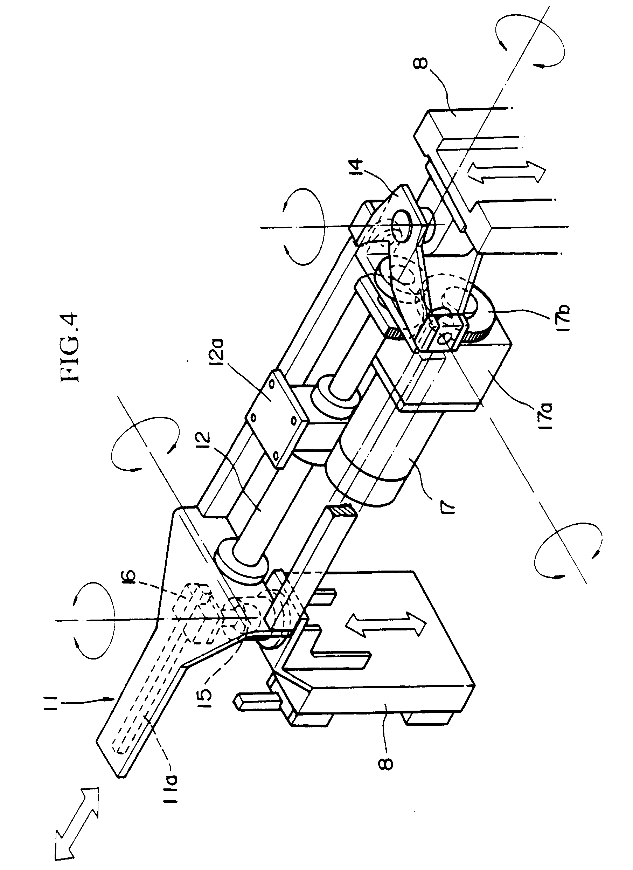

Between the elevation frames 8 of the movable mechanisms 6, a support frame 11 having the longitudinal shape is mounted. Then, a rolling shaft 12 is provided through the support frame 11. This rolling shaft 12 supports the model motorcycle 13 such that the model motorcycle 13 can freely lean in horizontal direction. In Fig. 4, backside edge of the support frame 11 is connected to the upper portion of the elevation frame 8 of the movable mechanism 6 corresponding to the backside of the model motorcycle 33 via a cross joint 14, while front side edge of the support frame 11 is connected to a linear guide 16 mounted on the upper portion of another elevation frame 8 via a ball joint 15. Herein, the linear guide 16 can freely slide along a guide-rail 11a mounted at under surface of the front side edge of the support frame 11. Thus, in response to the movement of the elevation frame 8 of each movable mechanism 6, the support frame 11 can lean in horizontal and vertical directions. In addition, a motor 17 is provided under the rolling shaft 12 positioned at the center portion of the support frame 11. This motor 17 is coupled to the rolling shaft 12 via a reduction gear 17a and a gear 17b, so that the motor 17 can revolve the rolling shaft 12 slowly. Then, a frame 13a of the model motorcycle 13 is mounted on a cradle 12a fixed at the center portion of the rolling shaft 12.

Meanwhile, 18, 19 designate shock absorbers which regulate the moving ranges of the movable carriage 2 and the slide member 7 of each movable mechanism 6.

Next, the model motorcycle 13 is designed to simulate the actual motorcycle. In order to detect operations of the rider, several kinds of sensors which senses operations of the accelerator, handle, brake, clutch, gearchanger etc. and the center-of-gravity to be varied in response to the riding attitude of the rider are provided in the model motorcycle 13. As such sensors, the model motorcycle 13 provides an acceleration sensor 21, a clutch-lever-angle sensor 22, a handle torque sensor 23, a lean torque sensor 24, a front braking-pressure sensor 25 and a rear braking-pressure sensor 26. In order to simulate the actual driving situation, the model motorcycle 13 provides a gear position switch 28 and several kinds of handle switches 27 such as a riding switch, a dimmer switch, a winker switch, a starter switch, a horn switch, a keel switch.

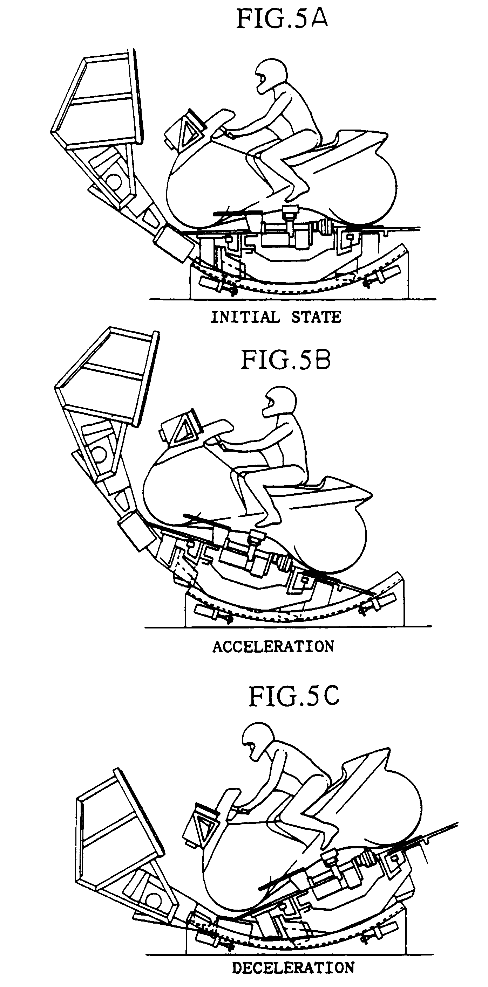

In order to simulate the real riding situation with accuracy, the model motorcycle 13 further provides an electric fan 29, vibrators 30 and speakers 31. In order to reproduce the real driving situation with the display image and sounds, four speakers 32 (including two pairs of right-channel and left-channel, R/L, speakers) and a display unit 33. Herein, the speakers 32 are positioned at front and back sides of the motorcycle 13, while the display unit 33 is positioned in front of the motorcycle 13. As shown in Fig. 1, the display unit 33 is provided apart from the base 1 and movable carriage 2. Instead, it is possible to attach the display unit 33 to the movable carriage 2 as shown in Fig. 5A. The arrangement and operation of the display unit 33 are designed such that the rider can easily watch the display image by moving the display screen in response to the movement of the motorcycle 13. Meanwhile, the output signals of the sensors described above are supplied to the computer, by which the display image is varied in response to the driving condition. In addition, by driving the motors 5, 9, 10, 17, the model motorcycle 13 is moved such that the rider can experience the riding operation similar to that of the real motorcycle.

Before describing the above-mentioned simulation control by the computer, diagrammatical description will be given with respect to the whole operation of the present system.

For example, when accelerating or decelerating the model motorcycle 13 by operating the accelerator or brake, the movable carriage 2 is moved in forward and backward directions so that the model motorcycle 13 is to be moved as shown in Figs. 5B and 5C. In the present embodiment, the model motorcycle 13 is moved in forward and upward directions along with the curved guide-rails 1a when accelerating, while the model motorcycle 13 is moved in backward and upward directions when decelerating. Such movement of the model motorcycle 13 can gives the rider the acceleration and deceleration feelings. When the display image shows that the motorcycle 13 will enter into the corner of road and the rider changes his riding attitude to thereby change the center-of-gravity, the motor 17 drives the rolling shaft 12 so that the motorcycle 13 is leaned toward the rightward or leftward direction. In addition, by driving the motors 9, 10 so that both of the slide member 7 and elevation frame 8 are moved, the model motorcycle 13 is elevated up in the leaned direction, resulting that the rider can temporarily feel the centrifugal force when cornering the motorcycle 13.

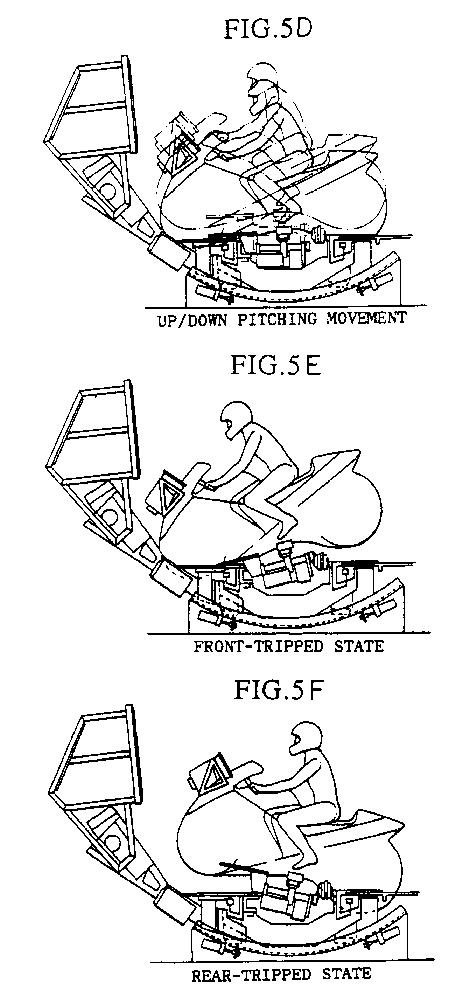

By moving one slide member 7 is moved in rightward direction while the other slide member 7 is moved in leftward direction, the yawing can be applied to the model motorcycle 13. By independently moving the slide members 7 in rightward and leftward directions, the slipping of the front or rear wheel of the motorcycle 13 can be obtained. By moving the single elevation frame 8 of the movable mechanism 6 in upward or downward direction, the cushion operation of the front or rear wheel of the motorcycle 13 can bo embodied as shown in Fig. 5D. Further, as shown in Figs. 5E, 5F, the motorcycle 13 can be controlled to be set in the front-tripped state and rear-tripped state.

Next, detailed description will be given with respect to the computer control of the present embodiment.

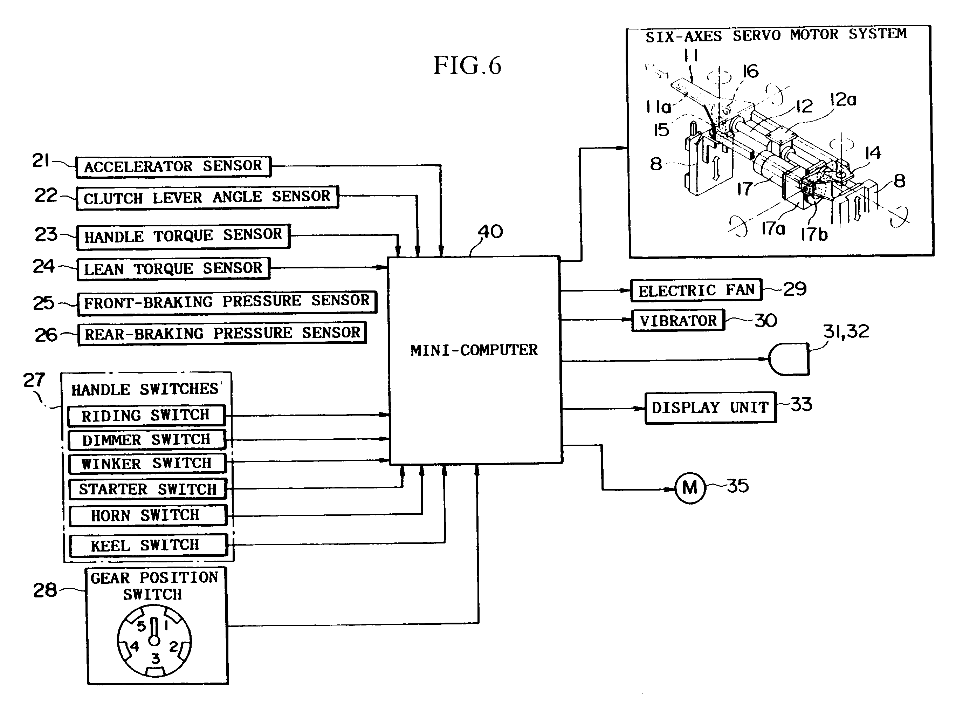

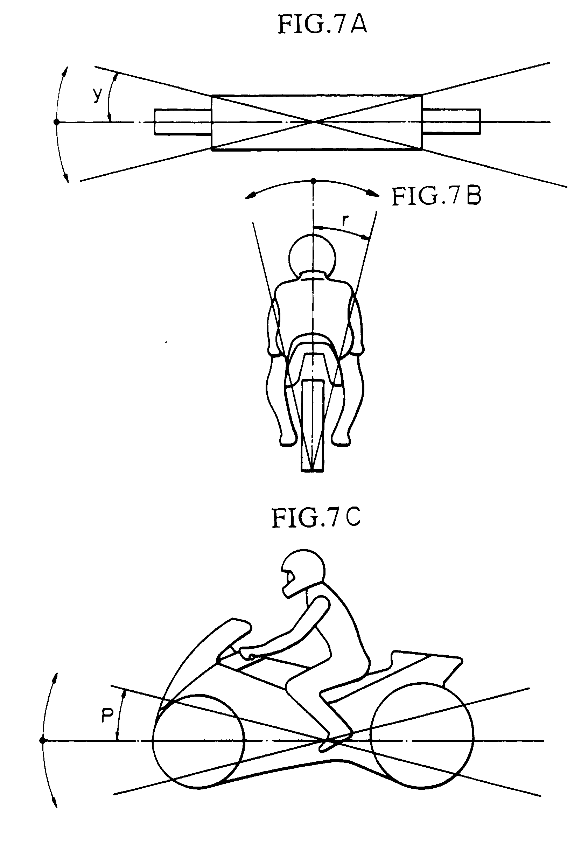

Fig. 6 is a block diagram showing an electric configuration of the riding simulation system of motorcycle according to the first embodiment of the present invention. The output signals of the foregoing sensors and switches 21 to 28 are applied to a mini-computer 40, which is constructed by a central processing unit (CPU), a read-only memory (ROM) or random-access memory (RAM) and the like (not shown). Under control of the mini-computer 40, a six-axes servo motor system for driving the motorcycle 13 as shown in Fig. 4, the electric fan 29, vibrators 30, speakers 31, 32, display unit 33 and a servo motor 35 for assisting the steering are to be activated. The above-mentioned six-axes servo motor system controls the yawing angle "y" (see Fig. 7A), rolling angle "r" (see Fig. 7B) and pitching angle "p" (see Fig. 7C) to be applied to the model motorcycle 13. In addition, the lean torque sensor 24 for detecting the leaning angle of the motorcycle 13 is constructed by the load cell and the like. Thus, the lean torque sensor 24 can output an electric signal corresponding to the stress (i.e., lean torque) which is occurred when leaning the motorcycle 13.

As shown in Fig. 1, there are provided seven speakers including three speakers 31 mounted on the motorcycle 13 and other four speakers 32 arranged in the front and back sides of the motorcycle 13. In order to simulate the real riding condition, the speakers 31 mainly reproduce the lower-pitch sounds, while the other speakers 32 reproduce the higher-pitch sounds. Meanwhile, the revolution speed of the electric fan 29 is controlled by the inverter circuit and the like in proportion to the simulated running speed of the model motorcycle 13. Thus, the wind pressure of the air blown toward the face of the rider by the electric fan 29 is controlled to become larger in response to the increase of the simulated running speed. Similar to the above-mentioned electric fan 29, the vibration produced by the vibrator 30 is controlled to become larger in proportion to the simulated running speed of the motorcycle 13.

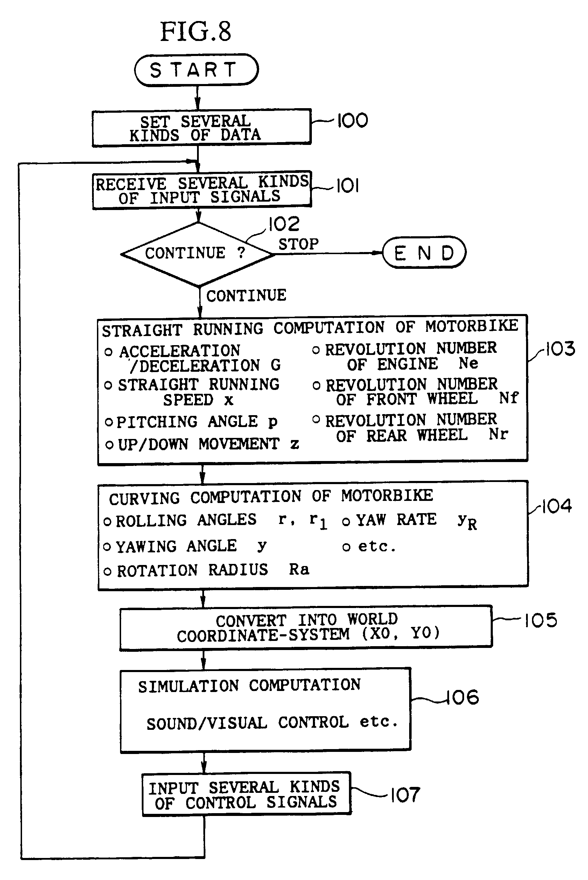

Fig. 8 is a flowchart showing the computation which is executed by the foregoing mini-computer 40 when carrying out the running simulation of the model motorcycle 13. In the present embodiment, the running simulation is started under the condition where the motorcycle 13 is running straight, and then the motorcycle 13 is leaned so that the motorcycle 13 is curved. In first step 100, data concerning several kinds of motorcycle running characteristics are set in the mini-computer 40. Then, when the rider starts the running simulation, such start event is detected in step 101. Thereafter, the computation processing enters into step 103 via step 102.

In step 103 where the straight running computation of motorcycle is to be executed, the mini-computer 40 computes the acceleration or deceleration "G", straight running speed "x", pitching angle "p", upward/downward movement "z", revolution number of engine "Ne", revolution number of front wheel "Nf", revolution number of rear wheel "Nr" etc. Such computation is carried out in accordance with the predetermined programs based on the outputs of the sensors in the mini-computer 40. Herein, the mini-computer inputs the information representative of the throttle operation, clutch stroke, gear position, front-braking pressure and rear-braking pressure. In addition, as the data representative of the motorcycle characteristics which is pre-stored in the mini-computer 40, the engine output torque characteristic, brake characteristic, wheel slip ratio, gear deceleration ratio, air resistance, wheel resistance, suspension characteristic, moment of inertia of the wheel, weight of motorcycle and center-of-gravity location of motorcycle.

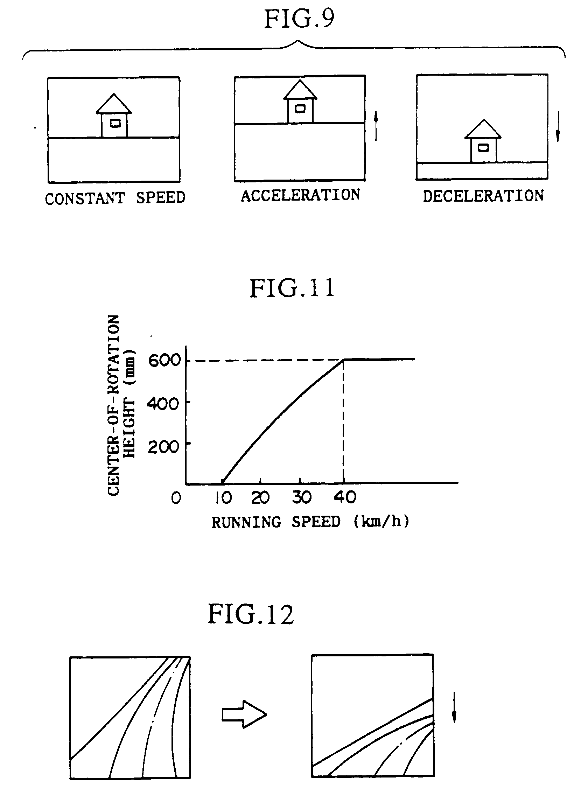

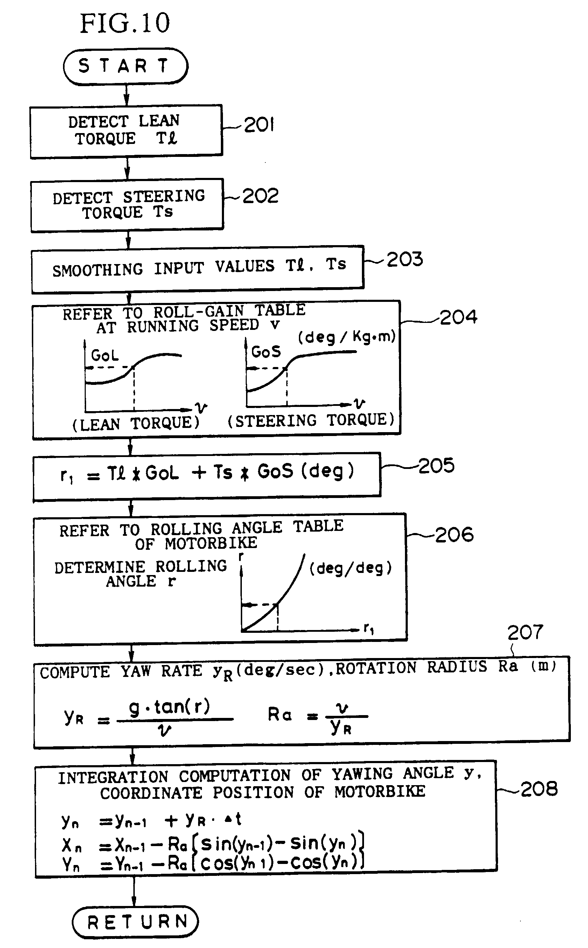

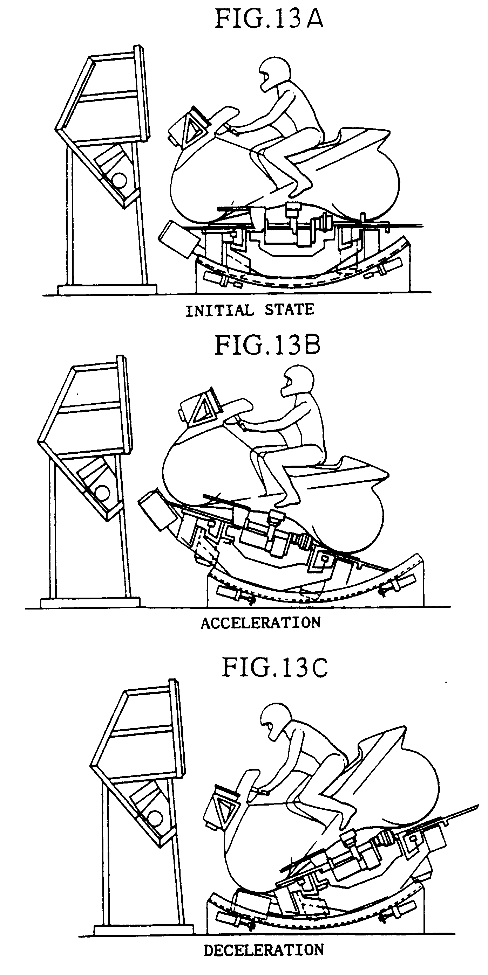

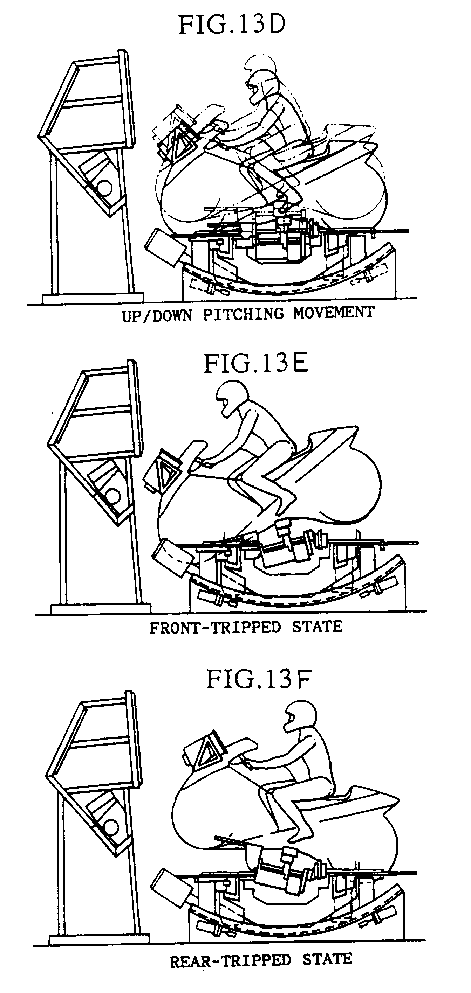

In this case, the foregoing six-axes servo motor system drives the model motorcycle 13 to perform the swing movement in addition to the upward/downward movement so that the rider can feel the acceleration and deceleration. By performing the simple upward/downward movement (see Fig. 5D) or simple front-tripped/rear-tripped movement (see Figs. 5E, 5F) at the initial stage of the swing movement of the motorcycle 13, it is possible to further improve the acceleration/deceleration simulation of the motorcycle 13. For such object, the present embodiment varies the image displayed on the display screen of the display unit 33. Normally, the display unit 33 displays the image corresponding to the running speed and direction to be applied to the motorcycle 13 such that the rider feels as if the motorcycle actually ran when riding the model motorcycle 13 which does not run. For example, the display unit 33 displays the scenery which can be seen by the rider when the motorcycle runs about the city and the like. In this case, the display image varies fast when the motorcycle runs at high speed, while the display image varies slowly when the motorcycle runs at low speed. Preferably, the display unit is linked with the model motorcycle as shown in Fig. 5 such that the relative position relationship between the eyes of rider and display screen is not substantially varied. However, in order to reduce the production cost of the present system, the display unit is provided apart from the model motorcycle so that the movable carriage 2 is directly placed on the ground as shown in Fig. 13. In case of Fig. 13, the display image is varied in response to the upward/downward movement of the eyes of rider which is occurred due to the pitching movement when accelerating or decelerating the model motorcycle 13 as shown in Figs. 13B, 13C. More specifically, when the eyes of rider is raised up by accelerating the motorcycle, the display image is shifted up as shown in Fig. 9(b) as comparing to the display image at constant speed shown in Fig. 9(a). In contrast, when the eyes of rider is lowered by decelerating the motorcycle, the display image is shifted down as shown in Fig. 9(c). As described above, the display image is shifted up or down in response to the upward/downward pitching movement of the motorcycle accompanying with the acceleration or deceleration. Thus, the rider can feels the simulated acceleration and deceleration without feeling any sense of disharmony with the actual riding condition. Herein, by correcting the display position based on the pitching angle of the eyes of rider and the pitching angle of the model motorcycle 13, the display image is shifted up or down as described above.

Incidentally, the center-of-rotation height in the swing movement of the motorcycle to be accelerated or decelerated as shown in Figs. 5B, 5C (or Figs. 13B, 13C) is fixed at the predetermined position. For example, such center-of-rotation height is fixed at the position in the vicinity of the heart of the rider, which is determined through some experiments. According to the experiment result, in order to simulate the acceleration to be actually applied to the head of the rider who drives the real motorcycle, the center-of-rotation height must be lower than the head of the rider but does not depart from the head of the rider. For this reason, the center-of-rotation height is determined as described above.

After executing the straight running computation of motorcycle, the computation processing proceeds to step 104 shown in Fig. 8 wherein the curving computation of motorcycle is to be executed.

Fig. 10 is a flowchart showing the detailed processings of the curving computation of motorcycle. In steps 201, 202, lean torque Tl and steering torque Ts of the model motorcycle 13 are detected so as to execute the curving computation of motorcycle.

As known well, the center-of-gravity of the motorcycle is changed by varying the riding attitude of the rider when changing the running direction. In other words, when curving the motorcycle, the rider moves the handle and simultaneously changes his riding attitude to change the center-of-gravity of the motorcycle. For this reason, in addition to the steering control, the model motorcycle 13 provides the lean torque sensor 24. As described before, this sensor 24 is constructed by the load cell, which detects the force applied thereto, i.e., change of the center-of-gravity of the motorcycle and rider. Then, the sensor 24 outputs the electric signal corresponding to the detection result. This electric signal is supplied to the mini-computer 40.

Next, description will be given with respect to the steering control of the present system. In order to perform the steering control, both the steering angle and steering force of the handle to be detected can be used. However, the present system uses the steering force to be detected by the handle torque sensor 23 for the steering control. Based on the detected steering force, the steering angle is computed.

As comparing to the automobile, the steering angle of the motorcycle is very-small. In addition, such steering angle of the motorcycle is differed between the low-speed running state and high-speed running state. More specifically, the steering angle must be large when the motorcycle is running at low speed, while the steering angle becomes smaller when the motorcycle is running at middle or high speed. Thus, extremely high precision must be required for the sensor which directly detects the steering angle. On the other hand, the sensor for detecting the steering force may have the relatively narrow detection range which is lower than 5 Kg, for example. In addition, the sensitivity of the sensor for detecting the steering force is hardly affected by the running speed of motorcycle in general. For the reasons described above, the present embodiment employs the sensor for detecting the steering force. Moreover, by use of such sensor for detecting the steering force, it is possible to drive the model motorcycle which is controlled in response to the detected lean torque even if the rider drives the motorcycle without controlling the handle by his hands. At this time, the steering force remains at 0 Kg·m but the lean torque is varied in response to the center-of-gravity of the motorcycle corresponding to the riding attitude of the rider. Thus, the above-mentioned hand-off driving of the motorcycle can be reproduced by the present system.

Next, in step 203 shown in Fig. 10, the detected lean torque Tl and steering torque Ts is subject to the smoothing process, by which the noises contained in the detected values are removed. In next step 204, the mini-computer 40 refers to the roll-gain table which is pre stored. In step 205, the mini-computer 40 computes the rolling angle "$r_1$" in accordance with the following formula (1).

$$r_1 = Tl*GoL + Ts*GoS \qquad (1)$$

In step 206, the computed rolling angle $r_1$ is corrected by use of the rolling angle table of motorcycle so as to further compute the actual rolling angle r with accuracy. In step 207, the yaw rate $y_R$ (degree/second) is computed by use of the constant g, rolling angle r and running speed v. Further, rotation radius Ra is computed based on the yaw rate $y_R$ as follows.

$$y_R = g*\tan(r)/v \qquad (2)$$

$$Ra = v/y_R \qquad (3)$$

In step 208, the integration is carried out so as to compute the current yawing angle $y_n$ and x-y coordinates $X_n$, $Y_n$ indicating the currently running position of the motorcycle.

$$y_n = y_{n-1} + y_R * \Delta t \qquad (4)$$

$$X_n = X_{n-1} - Ra[\sin(y_{n-1})-\sin(y_n)] \qquad (5)$$

$$Y_n = Y_{n-1} + Ra[\cos(y_{n-1})-\cos(y_n)] \qquad (6)$$

In order to simulate the inclination and centrifugal force to be applied to the motorcycle due to its rolling movement, the present embodiment sets the following conditions.

(1) It is preferable to set the normally used rolling angle at 15 degrees or less. Because, if the rolling angle of the model motorcycle becomes larger than 15 degrees, the rider can hardly ride on the model motorcycle. In some cases, the rolling angle of the real motorcycle is inclined by 15 degrees or more. In order to simulate such large rolling angle, the present embodiment inclines the display image in addition to the inclination of the model motorcycle, which will be described later in detail.

(2) The center-of-rotation in the rolling movement is varied in response to the simulated running speed of the model motorcycle. As shown in Fig. 11, the center-of-rotation in the rolling movement is positioned at the ground level when the motorcycle is stopped, while it is gradually raised toward the predetermined upper limit level in response to the simulated running speed of the model motorcycle. Herein, such upper limit level is set at the point which is higher than the ground level by 600 mm.

(3) when the model motorcycle is running at the low speed which is lower than 25 km/h, the yawing movement is made in synchronism with the rolling movement. In this case, the direction of the yawing movement is inverse to that of the rolling movement. For example, when the motorcycle is rolled in rightward direction, the yawing movement is made in leftward direction. Herein, the center-of-rotation of the yawing movement is set at certain position just below the rider's hips. Meanwhile, when the simulated running speed is raised higher than 40 km/h, the above-mentioned synchronization between the rolling movement and yawing movement is canceled.

Next, in step 105 shown in Fig. 8, the coordinates $(X_n, Y_n)$ which is computed by the curving computation of motorcycle as described above is converted into the world coordinate system (X0, Y0). This world coordinate system corresponds to the data representative of the world map and its scenery. Based on the current world coordinate, the corresponding scenery is displayed by the display unit 33. In step 106, computation of simulation quantity and variation quantity and generation of audio sounds and the like are carried out in order to control the display image. In next step 107, the mini-computer 40 controls the model motorcycle, display unit etc. based on several kinds of control signals which are computed as described above.

Next, description will be given with respect to the display unit. As the display unit, it is possible to employ several kinds of display systems such as the CRT display and primary-color projector which projects the light of primary colors to the screen. In advance, the moving picture such as the scenery which can be seen from the moving automobile is taken and the corresponding image information is stored. Then, the moving picture to be displayed is varied in response to the simulated running condition of the model motorcycle. Thus, the display is controlled such that the rider of the model motorcycle can feel as if he rides on and drives the real motorcycle.

For example, in the case where the rider changes his riding attitude and varies the center-of-gravity of the motorcycle to thereby roll the motorcycle when cornering, the actual running feeling cannot be obtained by only inclining the horizon of the display image of the display unit. For this reason, the pitching component representative of the pitching angle of the eyes of rider is added to the rolling angle of the motorcycle, wherein the pitching angle is less than 20% of the rolling angle. Thus, when cornering the motorcycle, the horizon of the display image is lowered in response to the pitching angle of the eyes of rider so that the actual riding feeling can be obtained. Such display control simulates the fact in which the viewpoint of rider is lowered in the cornering event as comparing to the straight running event of motorcycle. As described before, the rolling angle of the model motorcycle is limited for the safety of the rider. In order to compensate such limit of the rolling angle, the horizon of the display image is inclined in the direction inverse to the rolling direction when the rolling angle becomes larger. Thus, the rider can feel that the model motorcycle rolls well as if he rides on the real motorcycle.

[B] SECOND EMBODIMENT

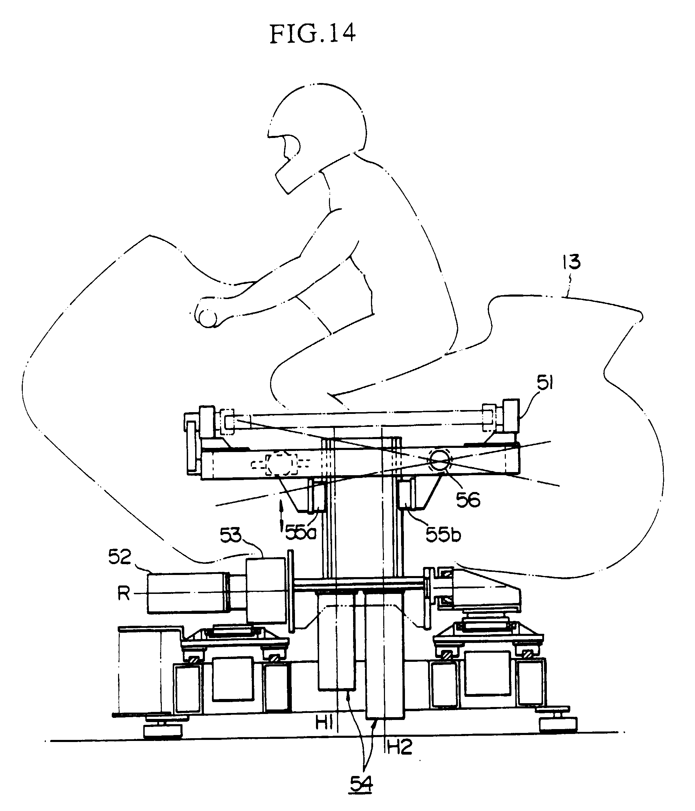

Next, description will be given with respect to the second embodiment of the present invention by referring to Figs. 14 to 16. Herein, the description concerning the parts identical to those in the foregoing first embodiment is omitted, hence, description will be only given with respect to the parts different from those of the first embodiment.

In the foregoing first embodiment, the model motorcycle 13 as a whole is mounted on the movable carriage 2, and the axes for the yawing movement, rolling movement and pitching movement are arranged within the movable carriage 2. However, such construction complicates the mechanism of the riding simulation system. In order to simplify the construction, the second embodiment cancels the movable carriage.

In the second embodiment as shown in Fig. 14, the model motorcycle 13 which is connected to the base via a frame 51 is subject to the rolling movement which is driven by a motor 52 and a gear box 53. Meanwhile, the model motorcycle is driven in upward direction by an elevation motor 54. In this case, a pair of bearing members 55a, 55b for transmitting the driving force of the elevation motor 54 are fixed at the frame 51. Herein, the bearing member 55a can slide in upward and downward directions, while another bearing member 55b is coupled to a pitching fulcrum 56. Therefore, the model motorcycle 13 is subject to the pitching movement by revolving around the pitching fulcrum 56 in response to the driving force of the elevation motor 54.

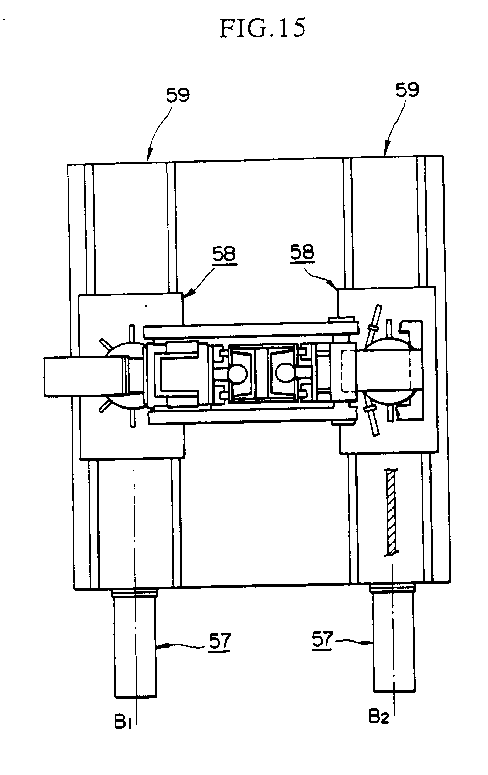

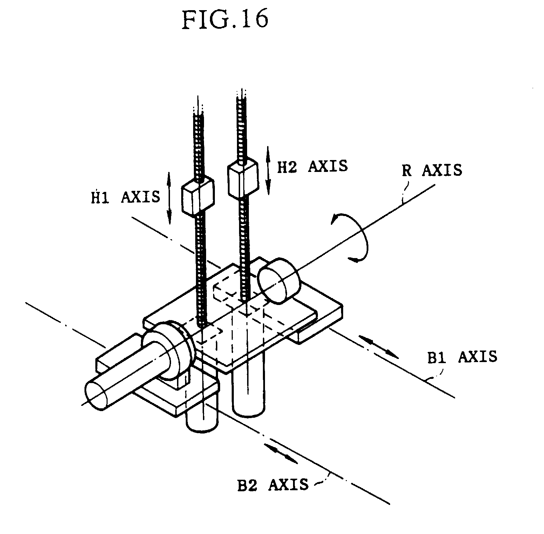

Meanwhile, the yawing movement is performed in response to the driving forces of a pair of motors 57 shown in Fig. 15. More specifically, by driving these motors 57 in different directions respectively, plates 58 on which both wheels of the model motorcycle 13 are fixed slide along rails 59 in different directions respectively so that the yawing movement can be obtained. As comparing to the first embodiment, the rails 59 exclusively used for the yawing movement are arranged perpendicular to the center axis of the model motorcycle 13, so that the second embodiment can obtain the longer stroke (i.e., larger movable range) in the yawing direction. In the second embodiment, the relationship between $H_1$, $H_2$ axes for the pitching movement, rolling axis R and $B_1$, $B_2$ axes for the yawing movement is set as shown in Fig. 16.

[C] THIRD EMBODIMENT

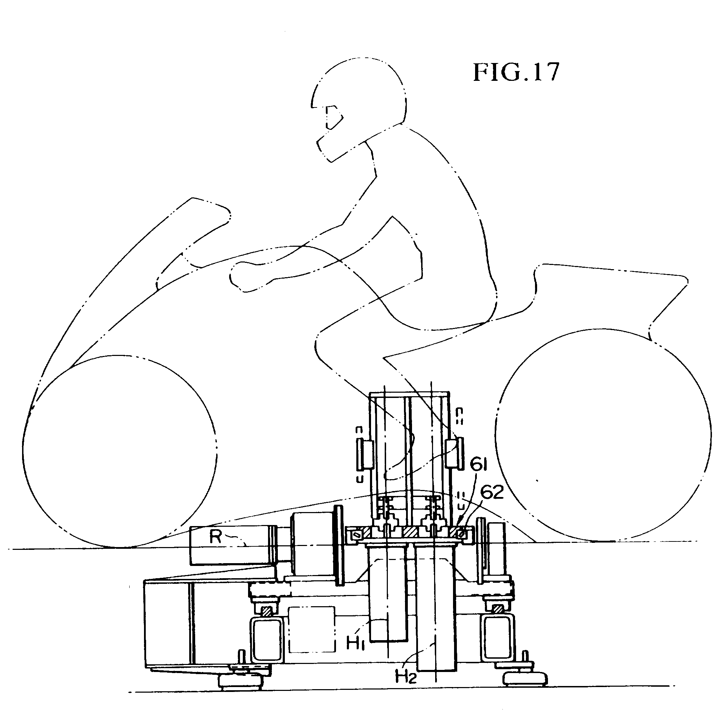

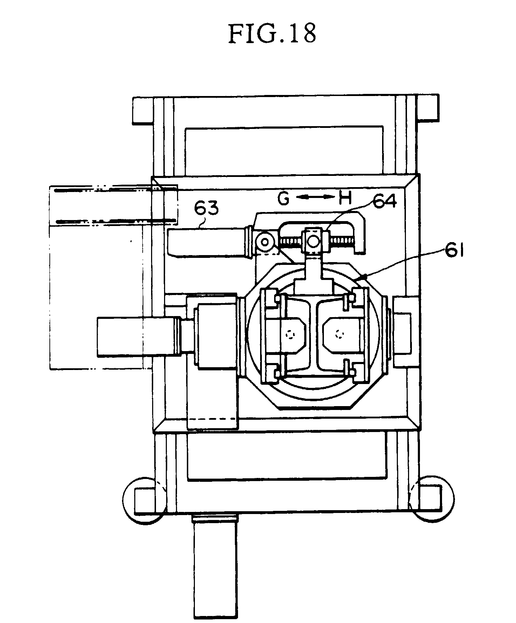

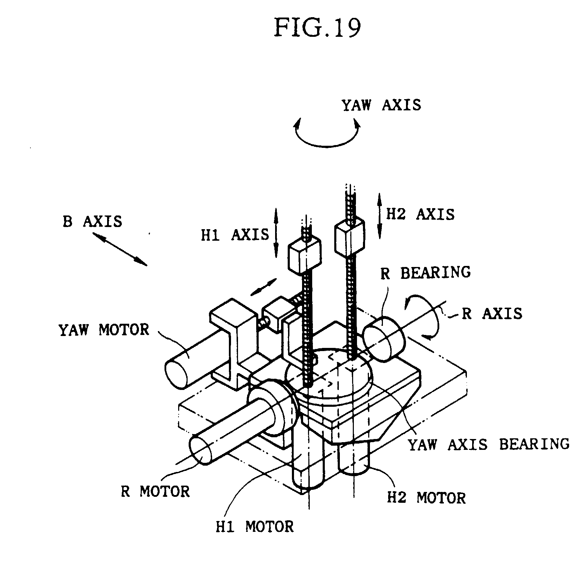

As comparing to the above-mentioned second embodiment, the third embodiment is characterized by providing a rotary table 61 for the yawing movement (see Figs. 17, 18). This rotary table 61 is mounted to the base via a cross-roller bearing 62. In this case, driving force of a yaw motor 63 is transmitted to the rotary table 61 via a slide member 64. Thus, the rotary table 61 rotates in directions GH shown in Fig. 18. As a result, the yawing movement can be obtained by the rotary table 61. Herein, the relationship between the moving directions and axes is as shown in Fig. 19.

Incidentally, the center-of-rotation in the yawing movement is positioned just below the hips of rider, for example.

The preferred embodiments of the present invention are constructed and controlled as described heretofore. However, this invention may be practiced or embodied in still other ways without departing from the spirit or essential character thereof. Therefore, the preferred embodiments described herein are illustrative and not restrictive, the scope of the invention being indicated by the appended claims and all variations which come within the meaning of the claims are intended to be embraced therein.

The invention as described above can be summarized as follows:

A riding simulation system of motorcycle provides at least a model motorcycle (13) on which a person can ride and which can be operated by a person. In response to the operation and movement of the person who rides on the model motorcycle, the model motorcycle is moved by a movable mechanism in a desirable direction such as a yawing direction, a rolling direction and a pitching direction. Preferably, the moving image such as the scenery which is seen from the running motorcycle is displayed in front of the person who rides on the model motorcycle. Such moving image is varied in response to the driving condition of the model motorcycle.

## Claims

1. A motorcycle riding simulation system to be ridden on by a person, comprising:

    a base (1) and a movable carriage (2) mounted on said base;
    a model motorcycle (13) mounted on said movable carriage (2) and comprising model controls, said model controls and said model motorcycle (13) being operable by said person;
    detecting means for sensing operation of said model motorcycle (13) and said model controls;
    driving means for driving said movable carriage (2) to move in a desired direction;
    control means for controlling said driving means in response to the operation sensed by said detecting means,
    said driving means comprising means for driving said movable carriage such as to simulate a rolling movement of said model motorcycle (13) about a center of rotation,

    characterized in that

    said driving means further comprises means for driving said movable carriage (2) such as to simulate a pitching movement of said model motorcycle,
    said control means controlling said driving means in response to the operation sensed by said detecting means such as to carry out said simulation of said pitching movement.

2. A motorcycle riding simulation system as defined in claim 1 wherein said control means raises said center of rotation with a simulated increase in running speed of said model motorcycle sensed by said detecting means.

3. A motorcycle riding simulation system as defined in claim 2 wherein the center-of-rotation in the rolling movement of said model motorcycle is raised from a ground level toward a predetermined height in response to increase of the running speed of said model motorcycle, thereafter, the center-of-rotation being fixed at the predetermined height after the running speed of said model motorcycle becomes higher than a predetermined speed.

4. A motorcycle riding simulation system as defined in any one of the preceding claims wherein said control means controls said driving means such as to vary a pitching angle of said model motor cycle in response to simulated acceleration and deceleration of said model motorcycle (13).

5. A motorcycle riding simulation system as defined in claim 4 wherein said control means controls said driving means such that a center-of-rotation in the pitching movement of said model motorcycle (13) is set in the vicinity of a breast portion of the person who rides on said model motorcycle (13).

6. A motorcycle riding simulation system as defined in claims 4 or 5 wherein said control means controls the pitching movement of said model motorcycle (13) such that said model motorcycle is inclined up in front when simulating acceleration and said model motorcycle (13) is inclined up in back when simulating deceleration.

7. A motorcycle riding simulation system as defined in any one of the preceding claims, further comprising a display unit (33) provided in front of said model motorcycle (13), said display unit (33) displaying images corresponding to prestored image signals.

8. A motorcycle riding simulation system as defined in claim 7 wherein said control means (40) further controls the image signal to thereby vary the image displayed by said display unit in response to a simulated running state of said model motorcycle (13), said control means (40) controlling said display unit such that a horizon of the image displayed by said display unit is rotated by an angle corresponding to an increase of a simulated rolling angle of said model motorcycle (13) in a direction inverse to a rolling direction of said model motorcycle (13) when the person rolls said model motorcycle (13) to increase the rolling angle beyond the predetermined simulated rolling angle.

9. A motorcycle riding simulation system as defined in claims 7 or 8 wherein said control means controls the image signal to thereby move the image displayed by said display unit in a pitching direction in response to the simulated rolling angle of said model motorcycle (13) when said model motorcycle (13) is rolled.

10. A motorcycle riding simulation system as defined in claims 7, 8 or 9, wherein said control means controls the image signal to thereby move the image displayed by said display unit in a pitching direction in response to a simulated acceleration applied to said model motorcycle (13).

11. A motorcycle riding simulation system as defined in one of claims 7 to 10 wherein the rolling angle of said model motorcycle (13) is limited in a predetermined rolling angle range when said model motorcycle is rolled, and said control means controlling the image signal to thereby incline the horizon of the image displayed by said display unit in the direction inverse to the rolling direction of said model motorcycle (13) when the person rolls said model motorcycle (13) to increase the simulated rolling angle beyond the predetermined rolling angle range.

12. A motorcycle riding simulation system as defined in one of claims 7 to 11 wherein said control means (40) further controls the image signal to thereby vary the image displayed by said display unit (33) in response to a simulated running state of said model motorcycle (13), said control means (40) varying a pitching angle of said model motorcycle (13) in response to a simulated acceleration and deceleration of said model motorcycle (13) and simultaneously controlling said image signal to thereby vary the image displayed by said display unit in response to the pitching angle of said model motorcycle (13).

13. A motorcycle riding simulation system as defined in any one of the preceding claims wherein said model controls include a steering handle which can be operated by said person.

14. A motorcycle riding simulation system as defined in claim 13 wherein the operation of said steering handle by said person is detected by said detecting means and a simulated steering angle of said model motorcycle (13) is computed by said control means (40) based on said steering handle operation and a simulated speed of said model motorcycle (13) such that a rolling angle of said model motorcycle (13) is controlled by said simulated steering angle.

15. A motorcycle riding simulation system as defined in any one of the preceding claims wherein said detecting means further comprises means for detecting a lean torque applied to said model motorcycle (13) in a rolling direction, said control means (40) controlling a rolling angle of said model motorcycle (13) based on said detected lean torque and the simulated speed of said model motorcycle (13).

16. A motorcycle riding simulation system as defined in claim 15 wherein said detecting means includes lean torque detecting means between said model motorcycle (13) and a movable portion of said movable carriage (2) which can be moved in the rolling direction at least, whereby said lean torque detecting means detects a lean torque applied to said model motorcycle (13) in the rolling direction.

17. A motorcycle riding simulation system as defined in claims 15 or 16 wherein said lean torque detecting means is constructed by a load cell which generates an electric signal corresponding to a stress applied thereto in the rolling direction.

18. A motorcycle riding simulation system as defined in one of claims 15 to 17 wherein the person inclines said model motorcycle in the rolling direction so that said model motorcycle corners, said control means controlling the running attitude of said model motorcycle to cancel the lean torque to be detected.

**Patentansprüche**

1. Motorrad-Fahrsimulationssystem, welches durch eine Person zu fahren ist, umfassend:

   eine Basis (1) und einen bewegbaren Träger (2), welcher auf der Basis angebracht ist, ein Modellmotorrad (13), welches auf dem bewegbaren Träger (2) angebracht ist und Modell-steuerelemente umfaßt, wobei die Modellsteuerelemente und das Modellmotorrad (13) durch die Person betätigbar sind, ein Erfassungsmittel zum Erfassen einer Betätigung des Modellmotorrads (13) und der Modell-Steuerelemente, ein Antriebsmittel zum Antreiben des bewegbaren Trägers (2) zum Bewegen in einer gewünschten Richtung, ein Steuer/Regelmittel zum Steuern/Regeln des Antriebsmittels in Antwort auf die durch das Erfassungsmittel erfaßte Betätigung, wobei das Antriebsmittel Mittel zum derartigen Antreiben des bewegbaren Trägers umfaßt, daß eine Rollbewegung des Modellmotorrads (13) um einen Drehpunkt simuliert wird,

   dadurch gekennzeichnet,

   daß das Antriebsmittel ferner Mittel zum derartigen Antreiben des bewegbaren Trägers (2) umfaßt, daß eine Nickbewegung des Modellmotorrads simuliert wird, wobei das Steuer/Regelmittel das Antriebsmittel in Antwort auf die durch das Erfassungsmittel erfaßte Betätigung derart steuert/regelt, daß die Simulation der Nickbewegung durchgeführt wird.

2. Motorrad-Fahrsimulationssystem nach Anspruch 1, worin das Steuer/Regelmittel den Drehpunkt mit einer simulierten Zunahme der Fahrgeschwindigkeit des Modellmotorrads, welche durch das Erfassungsmittel erfaßt wird, anhebt.

3. Motorrad-Fahrsimulationssystem nach Anspruch 2, worin der Drehpunkt der Rollbewegung des Modellmotorrads von einem Grundniveau zu einer vorbestimmten Höhe in Antwort auf die Zunahme der Fahrgeschwindigkeit des Modellmotorrads angehoben wird und danach der Drehpunkt bei der vorbestimmten Höhe fest bleibt, wenn die Fahrgeschwindigkeit des Modellmotorrads höher als eine vorbestimmte Geschwindigkeit wird.

4. Motorrad-Fahrsimulationssystem nach einem der vorhergehenden Ansprüche, worin das Steuer/Regelmittel das Antriebsmittel derart steuert/regelt, daß ein Nickwinkel des Modellmotorrads in Antwort auf eine simulierte Beschleunigung und Verzögerung des Modellmotorrads (13) verändert wird.

5. Motorrad-Fahrsimulationssystem nach Anspruch 4, worin das Steuer/Regelmittel das Antriebsmittel derart steuert/regelt, daß ein Drehpunkt der Nickbewegung des Modellmotorrads (13) in der Umgebung eines Brustabschnitts der Person eingestellt ist, die das Modellmotorrad (13) fährt.

6. Motorrad-Fahrsimulationssystem nach Anspruch 4 oder 5, worin das Steuer/Regelmittel die Nickbewegung des Modellmotorrads (13) derart steuert/regelt, daß das Modellmotorrad vorne aufwärts geneigt wird, wenn eine Beschleunigung simuliert wird, und daß das Modellmotorrad (13) hinten aufwärts geneigt wird, wenn eine Verzögerung simuliert wird.

7. Motorrad-Fahrsimulationssytem nach einem der vorhergehenden Ansprüche, ferner umfassend eine Anzeigeeinheit (33), die vor dem Modellmotorrad (13) vorgesehen ist, wobei die Anzeigeeinheit (33) Bilder anzeigt, die vorher abgespeicherten Bildsignalen entsprechen.

8. Motorrad-Fahrsimulationssystem nach Anspruch 7, worin das Steuer/Regelmittel (40) ferner das Bildsignal steuert/regelt, um dadurch das durch die Anzeigeeinheit angezeigte Bild in Antwort auf einen simulierten Fahrzustand des Modellmotorrads (13) zu verändern, wobei das Steuer/Regelmittel (40) die Anzeigeeinheit derart steuert/regelt, daß ein Horizont des durch die Anzeigeeinheit angezeigten Bildes um einen Winkel gedreht wird, welcher einer Zunahme eines simulierten Rollwinkels des Modellmotorrads (13) in entgegengesetzter Richtung zu einer Rollrichtung des Modellmotorrads (13) entspricht, wenn die Person das Modellmotorrad (13) zum Zunehmen des Rollwinkels über den vorbestimmten simulierten Rollwinkel hinaus rollt.

9. Motorrad-Fahrsimulationssystem nach Anspruch 7 oder 8, worin das Steuer/Regelmittel das Bildsignal steuert/-regelt, um dadurch das durch die Anzeigeeinheit angezeigte Bild in Antwort auf den simulierten Rollwinkel des Modellmotorrads (13) in einer Nickrichtung zu bewegen, wenn das Modellmotorrad (13) gerollt wird.

**10.** Motorrad-Fahrsimulationssystem nach einem der Ansprüche 7, 8 oder 9, worin das Steuer/Regelmittel das Bildsignal steuert/regelt, um dadurch das durch die Anzeigeeinheit angezeigte Bild in Antwort auf eine auf das Modellmotorrad (13) ausgeübte simulierte Beschleunigung in einer Nickrichtung zu bewegen.

**11.** Motorrad-Fahrsimulationssystem nach einem der Ansprüche 7 bis 10, worin der Rollwinkel des Modellmotorrads (13) auf einen vorbestimmten Rollwinkelbereich beschränkt ist, wenn das Modellmotorrad (13) gerollt wird, und worin das Steuer/Regelmittel das Bildsignal steuert/regelt, um dadurch den Horizont des durch die Anzeigeeinheit angezeigten Bildes in der Richtung entgegengesetzt zur Rollrichtung des Modellmotorrads (13) zu neigen, wenn die Person das Modellmotorrad (13) zur Zunahme des simulierten Rollwinkels über den vorbestimmten Rollwinkelbereich hinaus rollt.

**12.** Motorrad-Fahrsimulationssystem nach einem der Ansprüche 7 bis 11, worin das Steuer/Regelmittel (40) ferner das Bildsignal steuert/regelt, um dadurch das durch die Anzeigeeinheit (33) angezeigte Bild in Antwort auf einen simulierten Fahrzustand des Modellmotorrads (13) zu verändern, wobei das Steuer/Regelmittel (40) einen Nickwinkel des Modellmotorrads (13) in Antwort auf eine simulierte Beschleunigung und Verzögerung des Modellmotorrads (13) variiert und gleichzeitig das Bildsignal steuert/regelt, um dadurch das durch die Anzeigeeinheit angezeigte Bild in Antwort auf den Nickwinkel des Modellmotorrads (13) zu verändern.

**13.** Motorrad-Fahrsimulationssystem nach einem der vorhergehenden Ansprüche, worin die Modell-Steuerelemente eine Lenkstange umfassen, welche durch die Person betätigt werden kann.

**14.** Motorrad-Fahrsimulationssystem nach Anspruch 13, worin die Betätigung der Lenkstange durch die Person durch das Erfassungsmittel erfaßt wird und ein simulierter Lenkwinkel des Modellmotorrads (13) durch das Steuer/-Regelmittel (40) beruhend auf der Lenkstangenbetätigung und einer simulierten Geschwindigkeit des Modellmotorrads (13) derart berechnet wird, daß ein Rollwinkel des Modellmotorrads (13) durch den simulierten Lenkwinkel gesteuert wird.

**15.** Motorrad-Fahrsimulationssystem nach einem der vorhergehenden Ansprüche, worin das Erfassungsmittel ferner Mittel zum Erfassen eines Neigungsmoments umfaßt, welches auf das Modellmotorrad (13) in einer Rollrichtung ausgeübt wird, wobei das Steuer/Regelmittel (40) einen Rollwinkel des Modellmotorrads (13) beruhend auf dem erfaßten Neigungsmoment und der simulierten Geschwindigkeit des Modellmotorrads (13) steuert/-regelt.

**16.** Motorrad-Fahrsimulationssystem nach Anspruch 15, worin das Erfassungsmittel ferner Neigungsmomenterfassungsmittel zwischen dem Modellmotorrad (13) und einem bewegbaren Abschnitt des bewegbaren Trägers (2) umfaßt, welcher wenigstens in der Rollrichtung bewegt werden kann, wodurch das Neigungsmomenterfassungsmittel ein auf das Modellmotorrad (13) in der Rollrichtung ausgeübtes Neigungsmoment erfaßt.

**17.** Motorrad-Fahrsimulationssystem nach Anspruch 15 oder 16, worin das Neigungsmomenterfassungsmittel durch eine Lastzelle gebildet ist, welche ein elektrisches Signal erzeugt, das einer auf diese in der Rollrichtung ausgeübten Belastung entspricht.

**18.** Motorrad-Fahrsimulationssystem nach einem der Ansprüche 15 bis 17, worin die Person das Modellmotorrad in der Rollrichtung derart neigt, daß das Modellmotorrad ein Kurve fährt, wobei das Steuer/Regelmittel die Fahrlage des Modellmotorrads zum Aufheben des zu erfassenden Neigungsmoments steuert/regelt.

**Revendications**

**1.** Système de simulation de conduite d'une motocyclette, sur lequel doit monter une personne, comprenant :

une base (1) et un support déplaçable (2) monté sur ladite base;
un modèle de motocyclette (13) monté sur ledit support déplaçable (2) et comprenant des commandes de modèle, lesdites commandes de modèle et ledit modèle de motocyclette (13) pouvant être actionnés par ladite personne;
un moyen de détection pour mesurer le fonctionnement de ladite motocyclette modèle (13) et desdites commandes de modèle;
un moyen d'entraînement pour entraîner ledit support déplaçable (2) afin de se déplacer dans une direction souhaitée;
un moyen de commande pour commander ledit moyen d'entraînement en réponse au fonctionnement mesuré par ledit moyen de détection, ledit moyen d'entraînement comprenant un moyen pour entraîner ledit support déplaçable, de manière à simuler un mouvement de roulement de ladite motocyclette modèle (13) autour d'un centre de rotation,

caractérisé en ce que

ledit moyen d'entraînement comprend en outre un moyen pour entraîner ledit support déplaçable (2), de manière à simuler un mouvement de tangage de ladite motocyclette modèle, ledit moyen de commande commandant ledit moyen d'entraînement en réponse au fonctionnement mesuré par ledit moyen de détection, de manière à effectuer ladite simulation dudit mouvement de tangage.

2. Système de simulation de conduite de motocyclette selon la revendication 1, dans lequel ledit moyen de commande lève ledit centre de rotation par une augmentation simulée de la vitesse de fonctionnement de ladite motocyclette modèle, mesurée par ledit moyen de détection.

3. Système de simulation de conduite d'une motocyclette selon la revendication 2, dans lequel le centre de rotation lors du mouvement de roulement de ladite motocyclette modèle est levé depuis le niveau du sol, vers une hauteur prédéterminée en réponse à une augmentation de la vitesse de fonctionnement de ladite motocyclette modèle, ensuite, le centre de rotation est fixé à la hauteur prédéterminée après que la vitesse de fonctionnement de ladite motocyclette modèle ait dépassé une vitesse prédéterminée.

4. Système de simulation de conduite d'une motocyclette selon l'une quelconque des revendications précédentes, dans lequel ledit moyen de commande commande ledit moyen d'entraînement de manière à faire varier un angle de tangage de ladite motocyclette modèle, en réponse à une accélération et une décélération simulées de ladite motocyclette modèle (13).

5. Système de simulation de conduite de motocyclette selon la revendication 4, dans lequel ledit moyen de commande commande ledit moyen d'entraînement de manière qu'un centre de rotation du mouvement de tangage de ladite motocyclette modèle (13) soit établi à proximité d'une partie de poitrine de la personne qui monte sur ladite motocyclette modèle (13).

6. Système de simulation de la conduite d'une motocyclette selon la revendication 4 ou 5, dans lequel ledit moyen de commande commande le mouvement de tangage de ladite motocyclette modèle (13), de manière que ladite motocyclette modèle soit inclinée vers le haut à l'avant lors de la simulation d'une accélération et que ladite motocyclette modèle (13) soit inclinée vers le haut à l'arrière lors de la simulation d'une décélération.

7. Système de simulation de conduite d'une motocyclette selon l'une quelconque des revendications précédentes, comprenant en outre une unité d'affichage (13) prévue à l'avant de ladite motocyclette modèle (13), ladite unité d'affichage (13) affichant des images correspondant à des signaux d'image préstockés.

8. Système de simulation de la conduite d'une motocyclette selon la revendication 7, dans lequel ledit moyen de commande (40) commande en outre le signal d'image de façon à faire varier l'image affichée par ladite unité d'affichage, en réponse à un état de fonctionnement simulé de ladite motocyclette modèle (13), ledit moyen de commande (40) commandant ladite unité d'affichage de manière que l'horizon de l'image affiché par ladite unité d'affichage soit tourné d'un angle correspondant à une augmentation d'un angle de roulis simulé de ladite motocyclette modèle (13), dans une direction inverse à une direction de roulement de ladite motocyclette modèle (13) lorsque la personne fait rouler ladite motocyclette modèle (13), pour augmenter l'angle de roulis au-delà de l'angle de roulis simulé prédéterminé.

9. Système de simulation de la conduite d'une motocyclette selon la revendication 7 ou 8, dans lequel ledit moyen de commande commande le signal d'image afin de déplacer l'image affichée par ladite unité d'affichage, dans une direction de tangage en réponse à l'angle de roulis simulé de ladite motocyclette modèle (13), lorsque ladite motocyclette modèle (13) roule.

10. Système de simulation de la conduite d'une motocyclette selon la revendication 7, 8 ou 9, dans lequel ledit moyen de commande commande le signal d'image afin de déplacer l'image affichée par ladite unité d'affichage dans une direction de tangage, en réponse à une accélération simulée appliquée à ladite motocyclette modèle (13).

11. Système de simulation de la conduite d'une motocyclette selon l'une des revendications 7 à 10, dans lequel l'angle de roulis de ladite motocyclette modèle (13) est limité à une plage d'angle de roulis prédéterminée, lorsque ladite motocyclette modèle roule, et ledit moyen de commande commandant le signal d'image de façon à incliner l'horizon de l'image affiché par ladite unité d'affichage, dans la direction inverse à la direction de roulement de ladite motocyclette modèle (13), lorsque la personne fait rouler ladite motocyclette modèle (13), afin d'augmenter l'angle de roulis simulé au-delà de la plage d'angle de roulis prédéterminée.

12. Système de simulation de la conduite d'une motocyclette selon l'une des revendications 7 à 11, dans lequel ledit moyen de commande (40) commande en outre le signal d'image afin de faire varier l'image affichée par ladite unité d'affichage (13), en réponse à un état de fonctionnement simulé de ladite motocyclette modèle (13), ledit moyen de commande (40) fait varier un angle de tangage de ladite motocyclette modèle (13), en réponse à une accélération et une décélération simulées de ladite motocyclette modèle (13) et commandant simultanément ledit signal d'image, pour faire varier de ce fait l'image affichée par ladite unité d'affichage, en réponse à l'angle de tangage de ladite motocyclette modèle (13).

13. Système de simulation de la conduite d'une motocyclette selon l'une quelconque des revendications précédentes, dans lequel lesdites commandes de modèle comprennent un guidon de direction qui peut être actionné par ladite personne.

14. Système de simulation de la conduite d'une motocyclette selon la revendication 13, dans lequel l'actionnement dudit guidon de direction par ladite personne est détecté par ledit moyen de détection et un angle de direction simulé de ladite motocyclette modèle (13) est calculé par ledit moyen de commande (40), d'après ledit actionnement de guidon de direction et une vitesse simulée de ladite motocyclette modèle (13), de manière qu'un angle de roulis de ladite motocyclette modèle (13) soit commandé par ledit angle de direction simulé.

15. Système de simulation de la conduite d'une motocyclette selon l'une quelconque des revendications précédentes, dans lequel ledit moyen de détection comprend en outre un moyen pour détecter un couple d'inclinaison appliqué à ladite motocyclette modèle (13) dans une direction de roulement, ledit moyen de commande (40) commandant un angle de roulis de ladite motocyclette modèle (13) d'après ledit couple d'inclinaison mesuré et la vitesse simulée de ladite motocyclette modèle (13).

16. Système de simulation de la conduite d'une motocyclette selon la revendication 15, dans lequel ledit moyen de détection comprend un moyen de détection de couple d'inclinaison entre ladite motocyclette modèle (13) et une partie déplaçable dudit support déplaçable (2), qui peut être déplacé au moins dans la direction de roulement, de manière que ledit moyen de détection de couple d'inclinaison mesure un couple d'inclinaison appliqué à ladite motocyclette modèle (13), dans la direction de roulement.

17. Système de simulation de la conduite d'une motocyclette selon la revendication 15 ou 16, dans lequel ledit moyen de détection de couple d'inclinaison est constitué d'une boîte dynamométrique, qui produit un signal électrique correspondant à une contrainte lui étant appliquée dans la direction de mouvement.

18. Système de simulation de la conduite d'une motocyclette selon l'une des revendications 15 à 17, dans lequel la personne incline la motocyclette modèle dans la direction de roulement, de manière que ladite motocyclette modèle prenne une attitude de virage, ledit moyen de commande commandant l'attitude de roulement de ladite motocyclette modèle, pour annuler le couple d'inclinaison devant être détecté.

FIG.1

EP 0 406 729 B1

14

# FIG.2

FIG.3

FIG.4

EP 0 406 729 B1

## FIG.5A

INITIAL STATE

## FIG.5B

ACCELERATION

## FIG.5C

DECELERATION

EP 0 406 729 B1

## FIG.5D

UP/DOWN PITCHING MOVEMENT

## FIG.5E

FRONT-TRIPPED STATE

## FIG.5F

REAR-TRIPPED STATE

19

FIG.6

SIX-AXES SERVO MOTOR SYSTEM

ELECTRIC FAN 29
VIBRATOR 30
31,32
DISPLAY UNIT 33
M 35

MINI-COMPUTER
40

ACCELERATOR SENSOR 21
CLUTCH LEVER ANGLE SENSOR 22
HANDLE TORQUE SENSOR 23
LEAN TORQUE SENSOR 24
FRONT-BRAKING PRESSURE SENSOR 25
REAR-BRAKING PRESSURE SENSOR 26

HANDLE SWITCHES
RIDING SWITCH
DIMMER SWITCH
WINKER SWITCH
STARTER SWITCH
HORN SWITCH
KEEL SWITCH
27

GEAR POSITION SWITCH
28

FIG.7A

FIG.7B

FIG.7C

## FIG.8

```
START
  │
  ▼
┌─────────────────────┐
│ SET SEVERAL         │── 100
│ KINDS OF DATA       │
└─────────────────────┘
  │
  ▼
┌─────────────────────┐
│ RECEIVE SEVERAL KINDS│── 101
│ OF INPUT SIGNALS    │
└─────────────────────┘
  │
  ▼        102
   ◇                STOP
  CONTINUE ?  ──────────────►  END
   ◇
  │ CONTINUE
  ▼
```

STRAIGHT RUNNING COMPUTATION OF MOTORBIKE ── 103

- ○ ACCELERATION /DECELERATION G
- ○ STRAIGHT RUNNING SPEED x
- ○ PITCHING ANGLE p
- ○ UP/DOWN MOVEMENT z
- ○ REVOLUTION NUMBER OF ENGINE Ne
- ○ REVOLUTION NUMBER OF FRONT WHEEL Nf
- ○ REVOLUTION NUMBER OF REAR WHEEL Nr

CURVING COMPUTATION OF MOTORBIKE ── 104

- ○ ROLLING ANGLES $r$, $r_1$
- ○ YAWING ANGLE $y$
- ○ ROTATION RADIUS Ra
- ○ YAW RATE $y_R$
- ○ etc.

CONVERT INTO WORLD COORDINATE-SYSTEM (X0, Y0) ── 105

SIMULATION COMPUTATION

SOUND/VISUAL CONTROL etc. ── 106

INPUT SEVERAL KINDS OF CONTROL SIGNALS ── 107

22

## FIG.9

CONSTANT SPEED      ACCELERATION      DECELERATION

## FIG.11

## FIG.12

# FIG.10

START

DETECT LEAN
TORQUE Tℓ — 201

DETECT STEERING
TORQUE Ts — 202

SMOOTHING INPUT VALUES Tℓ, Ts — 203

REFER TO ROLL-GAIN TABLE
AT RUNNING SPEED v — 204

$(\deg / Kg \cdot m)$

GoL

GoS

$v$

(LEAN TORQUE)        (STEERING TORQUE)

$r_1 = Tℓ \times GoL + Ts \times GoS \ (\deg)$ — 205

REFER TO ROLLING ANGLE TABLE
OF MOTORBIKE — 206

DETERMINE ROLLING
ANGLE r

$(\deg/\deg)$

$r_1$

COMPUTE YAW RATE $y_R (\deg/sec)$, ROTATION RADIUS Ra (m) — 207

$$y_R = \frac{g \cdot \tan(r)}{v} \qquad Ra = \frac{v}{y_R}$$

INTEGRATION COMPUTATION OF YAWING ANGLE y,
COORDINATE POSITION OF MOTORBIKE — 208

$$y_n = y_{n-1} + y_R \cdot \blacktriangle t$$
$$X_n = X_{n-1} - Ra \left[ \sin(y_{n-1}) - \sin(y_n) \right]$$
$$Y_n = Y_{n-1} - Ra \left[ \cos(y_{n-1}) - \cos(y_n) \right]$$

RETURN

## FIG.13A

INITIAL STATE

## FIG.13B

ACCELERATION

## FIG.13C

DECELERATION

## FIG.13D

UP/DOWN PITCHING MOVEMENT

## FIG.13E

FRONT-TRIPPED STATE

## FIG.13F

REAR-TRIPPED STATE

FIG.14

FIG.15

## FIG.16

FIG.17

EP 0 406 729 B1

FIG.18

## FIG.19

YAW AXIS

B AXIS

H1 AXIS

H2 AXIS

R BEARING

YAW MOTOR

R AXIS

YAW AXIS BEARING

R MOTOR

H1 MOTOR

H2 MOTOR